# EUROPÄISCHE PATENTSCHRIFT

(11) **EP 0 658 279 B1**
(45) Veröffentlichungstag und Bekanntmachung des Hinweises auf die Patenterteilung: **30.10.1996**
(21) Anmeldenummer: 93918764.7
(22) Anmeldetag: 30.08.1993
(51) Int. Cl.: H01M 12/08, H01M 2/40

(54) **ZINK-BROM-BATTERIE MIT UMLAUFENDEN ELEKTROLYTEN**
ZINC-BROMINE BATTERY WITH CIRCULATING ELECTROLYTES
BATTERIE ZINC-BROME AVEC DES ELECTROLYTES CIRCULANTS

(30) Priorität: 01.09.1992 AT 1741/92
(43) Veröffentlichungstag der Anmeldung: 21.06.1995
(73) Patentinhaber: ELIN ENERGIEANWENDUNG GESELLSCHAFT M.B.H., A-1141 Wien (AT)
(72) Erfinder: TOMAZIC, Gerd, A-8680 Mürzzuschlag (AT)
(74) Vertreter: Krause, Peter
(86) Internationale Anmeldenummer: AT9300134
(87) Internationale Veröffentlichungsnummer: WO9406167

(56) Entgegenhaltungen:
- EP-A- 0 165 000
- EP-A- 0 327 528
- EP-A- 0 438 044
- PATENT ABSTRACTS OF JAPAN vol. 15, no. 361 (C-867)12. September 1991 & JP,A,03 143 420 (MATSUSHITA ELECTRIC IND. CO. LTD.) 19. Juni 1991

## Beschreibung

Die Erfindung betrifft eine Zink-Brom-Batterie mit umlaufenden Elektrolyten, motorgetriebenen Pumpen mit Pumpenräumen, Behältern mit einem Druckausgleich für die Elektrolyten, bipolaren Elektroden und zwischen diesen angeordneten Separatoren, die mit Kunststoff aufgebaut sind, wobei die Rahmen der Separatoren und die eine größere Dicke als der mittlere Teil der Elektroden aufweisenden Rahmen der Elektroden miteinander verschweißt sind und den damit gebildeten Elektrodenräumen zugeordnete Elektrolytzu- und -ableitungen und gegebenenfalls Wärmetauscher für die Elektrolyten.

Die elektrochemische Paarung Zink-Brom ist für die Speicherung von Strom von steigender Bedeutung. Diese Systeme kommen stationär zur Speicherung von Strom anstelle von Notstromaggregaten, wie beispielsweise Dieselmotoren und Generatoren, in Frage, aber auch als Energiequelle für die Traktion. In beiden Fällen ist das Gewicht nicht von hervorragender Bedeutung, sondern es können wie bei der Zink-Brom-Batterie mit umlaufenden Elektrolyten zusätzliche Aggregate zum Einsatz kommen.

Es sind zwar auch Zink-Brom-Batterien bekannt, bei welchen nicht nur das Zink an der Elektrode gespeichert wird, sondern auch das abgeschiedene Brom liegt in diesem Falle einer porösen Aktivkohlenmasse vor. Das Speichervermögen derartiger Batterien ist außerordentlich gering, und die Dendriten bei der Abscheidung von Zink wirken besonders störend, so daß nur mit geringen Stromdichten gearbeitet werden kann.

Zink-Brom-Batterien mit zwei umlaufenden Elektrolytflüssigkeiten weisen zwei besondere Vorteile auf.

Einerseits wird durch die Strömung das Dendritenwachstum gering gehalten und anderseits kann durch umlaufende Elektrolyten über die Menge desselben die Kapazität der Batterie mitbestimmt werden.

Bei der Ausbildung einer Zink-Brom-Batterie wurde immer mehr dazu übergegangen, als Werkstoff Kunststoff, insbesondere Polyolefine und hier Polypropylen, einzusetzen. Diese Kunststoffe besitzen eine hervorragende chemische Beständigkeit, weisen jedoch anderseits verschiedene Nachteile auf. So müssen sowohl die Elektroden als auch die Separatoren einerseits aus Gründen des elektrischen Widerstandes, anderseits um den Materialeinsatz zu minimieren, als besonders dünnwandige Elemente ausgebildet werden. Bei derartigen dünnwandigen Elementen besteht allerdings der Nachteil, daß sie von der erwünschten geometrischen Form in der Regel eine Ebene, selbst durch geringfügige Einflüsse, wie beispielsweise unterschiedliche Temperaturen im Elektrolyten oder auch Druckunterschiede zwischen dem Anolyt und dem Katholyt, zu unerwünschten bevorzugten Strömungserscheinungen führen. Man muß hiebei berücksichtigen, daß die Elektrolyten durch Räume fließen, die beispielsweise eine Fläche von 30 cm x 30 cm aufweisen, und die Schichtdicke der Strömung 1 mm bis 2 mm betragen kann. Erfolgen Verformungen des Kunststoffes, so erfolgen die angesprochenen Unregelmäßigkeiten in der Strömung, wodurch dann unterschiedliches Abscheiden und auch Auflösen des Zinkfilmes auftritt, wobei gegebenenfalls lokale Erhitzungen bedingt sind, welche wieder zu einer vorzeitigen Zerstörung der Batterie führen können.

Bei Zink-Brom-Batterien, die mit Kunststoff aufgebaut sind, ist es weiters bekannt, daß selbst bei starkem mechanischem Druck an den abzudichtenden Stellen, beispielsweise den Rändern der Elektroden und Separatoren, es immer wieder zu Undichtigkeitsstellen kommt, so daß derartige Batterien nicht zum Einsatz gebracht werden können.

Aus der EP 438 044 ist ein galvanisches Element, insbesondere eine wiederaufladbare Zink-Brom-Batterie bekannt, bei der die Verbindungsleitung für den Druckausgleich bei Normallage des Elementes im Bereich des höchsten Punktes der Sammelleitung mündet.

Die vorliegende Erfindung hat sich zum Ziel gesetzt, eine Zink-Brom-Batterie zu schaffen, die für verschiedensten Einsatz geeignet ist. Insbesondere soll eine kleine Einheit geschaffen werden, die beispielsweise 150 bis 500 Watt-Stunden zur Verfügung stellen kann und so den langen Betrieb von unterschiedlichen elektrischen Verbrauchern, wie beispielsweise Bohrmaschinen, Rasenmähern, aber auch Radioapparaten, Sendern, Fernsehapparaten u. dlg., ermöglicht.

Die erfindungsgemäße Zink-Brom-Batterie geht von einem Stand der Technik aus, wie er durch die EP-B1 0167517 gegeben ist.

Die erfindungsgemäße Zink-Brom-Batterie ist dadurch gekennzeichnet, daß durch jeweils zumindest einen Behälter, Katholytzu- und -ableitungen, Pumpraum und Kathodenräumen eine gas- und flüssigkeitsdichte Einheit gebildet ist, welche mit einer weiteren derartigen Einheit, gebildet mit einem weiteren Behälter, Anolytzu- und -ableitungen weiteren Pumpraum und Anodenräumen, ausschließlich über Separatoren verbunden sind, und daß zwischen beiden Elektrolytbehältern für den Druckausgleich zwei Kammern vorgesehen sind, die durch eine gummielastische Membran voneinander getrennt sind.

Durch den Einsatz von Elektroden und Separatoren, die mit Kunststoff aufgebaut sind, können für Zink-Brom-Batterien bewahrte Materialien zum Einsatz kommen, wobei die Verbindung der Ränder, sei es durch Verschweißen mit oder ohne Schweißzusatzwerkstoffe, also daß beispielsweise normal zur Erstreckung der Separatoren und Elektroden ein zusätzlicher Film aus dem Material der Separatoren aufgebracht wird, wobei gleichzeitig die Ränder ebenfalls mitangeschmolzen und verbunden werden. Der Einsatz von bipolaren Elektroden ermöglicht einerseits, wie bekannt, höhere Spannungen, und anderseits wird der Raumbedarf dadurch minimiert. Für extreme Beanspruchungen kann es von Vorteil sein, für eine Temperierung, insbesondere Kühlung, der Elektrolytflüssigkeiten über Wärmeaustauscher Rechnung zu tragen.

Dadurch, daß jeweils gas- und flüssigkeitsdichte Raumeinheiten gebildet werden, welche, insbesondere ausschließlich, über die Separatoren in Verbindung stehen, wird eine Batterie geschaffen, die auch bei ungünstigen Bedingungen den Betrieb sicherstellt, wobei gleichzeitig keine Leckagen mit Elektrolytflüssigkeit auftreten können, so daß eine besonders wartungsarme Batterie gegeben ist. Von besonderem Vorteil ist hiebei, daß eine derartige Batterie, auch wenn sie nicht, wie bei anderen Batterien erforderlich, bei der Lagerung gewartet, beispielsweise geladen wird, keine Zerstörung des Systems eintritt, sondern es ist für die Speicherung der Batterie lediglich erforderlich, dieselbe wieder an ein Ladegerät anzuschließen, worauf die ursprüngliche Kapazität wieder erreicht wird.

Ist zwischen beiden Elektrolytbehältern ein Druckausgleich vorgesehen, so kann auch bei unterschiedlichem Druckaufbau im Elektrolyten, wie er beispielsweise durch unregelmäßigen Pumpenlauf, Verstopfungen in den Leitungen u. dgl., gegeben sein kann, eine Verformung der Elektroden und Separatoren auf Grund von Druckunterschieden besonders einfach vermieden werden.

Sind beide Pumpen von einem Motor angetrieben, so ist auf besonders einfache Weise einerseits eine Gewichtsersparnis gegeben, wobei anderseits für gleichmäßige Strömungsgeschwindigkeiten sowohl für den Anolyten als auch den Katholyten Sorge getragen ist.

Entspricht das Flüssigkeitsaufnahmevermögen der Behälter jeweils zumindest der Jeweiligen Anolyt- bzw. Katholytmenge, so kann eine Entladung der Batterie während längeren Stillstandszeiten dadurch vermieden werden, daß der Elektrolyt aus den Elektrodenräumen entfernt wird.

Sind die Behälter, bezogen auf die Elektroden, nebeneinander angeordnet, so kann strömungsmäßig eine besonders einfache konstruktive Ausbildung durchgeführt werden, da beispielsweise die Pumpen strömungstechnisch günstig angeordnet werden können. Ein weiterer Vorteil besteht darin, daß durch einfaches Kippen der Batterie, also ein Anordnen der Batterie in der Form, daß die Behälter unten und die Elektroden oben zu liegen kommen, eine einfache Entleerung des Elektrolyten aus den Elektrodenräumen durchgeführt werden kann, unter der Voraussetzung, daß die Elektrolytmenge im wesentlichen zur Gänze von den Behältern aufgenommen werden kann.

Eine besonders vorteilharte Ausführungsform der erfindungsgemäßen Batterie ist dann gegeben, wenn in Betriebstellung der Batterie die Behälter für die Elektrolytflüssigkeit oberhalb der Elektroden angeordnet sind, da dann eine besonders gute Anströmung der Elektrodenräume unter gleichzeitiger Berücksichtigung der gegebenenfalls auftretenden Gasblasen durchgeführt werden kann.

Weist jeder Behälter eine verschließbare Öffnung zum Entnehmen und Wiederfüllen für die Elektrolytflüssigkeit auf, so kann beispielsweise für Verkaufszwecke die Zink-Brom-Batterie, also die reinen Kunststoffteile mit Pumpe u. dgl., trocken gelagert werden, und es ist lediglich die Füllung vor Ort mit den Elektrolyten vorzunehmen.

Eine besonders einfache und kompakte Ausführung der Batterie ergibt sich dann, wenn die Separatoren und/oder die Elektroden an ihren Rändern, z. B. umschweißten Rahmen, miteinander deckende durchgehende Durchbrechungen aufweisen, durch welche die Elektrolytzu- bzw. -ableitungen gebildet sind, die jeweils in die Elektrodenräume Abzweigleitungen aufweisen. Mit einer derartigen Ausbildung kann eine besonders kompakte Batterie erreicht werden, wobei gleichzeitig zusätzliche Leitungen, die außerhalb des Paketes vorhanden sind, entweder gänzlich vermieden werden können oder auf ein Minimum zu beschränken sind.

Ist zwischen dem Endkontakt einer Elektrode und der Ableitung einer Elektrode eine elektrische Sicherung angeordnet, so können zu hohe Strombelastungen sowohl der Batterie als auch der Verbraucher vermieden werden.

Weist die Batterie zumindest einen Griff, insbesondere zwei einander gegenüberliegende Griffleisten auf, so kann, wie an sich bekannt, eine derartige Batterie besonders einfach manipuliert werden.

Das erfindungsgemäße Verfahren zum Lagern einer Zink-Brom-Batterie besteht im wesentlichen darin, daß eine gezielte Entladung der Batterie mit im Umlauf befindlichen Elektrolyten durchgeführt und sodann die Batterie im ungeladenen Zustand gelagert wird. Bei besonders einfacher Ausgestaltung einer Batterie, wie sie für den breiten Einsatz gefordert ist, muß auch ein besonders einfaches System zur Lagerung der Batterie geschaffen sein, das Schädigungen bei der Lagerung vollkommen ausschließt. Dies ist durch eine vollständige gezielte Entladung möglich, wobei zur Vermeidung von thermischen Belastungen der Batterie der Elektrolyt in Umlauf gehalten wird.

Wird als vorzugsweise alleiniger Verbraucher der gezielten Entladung der elektrische Antrieb für die Pumpen des Elektrolyten verwendet, so ist sichergestellt, daß bei der Entladung der Elektrolyt zwangsweise im Kreislauf bleibt, wobei keine zusätzlichen Verbraucher, wie beispielsweise Widerstände, über welche die elektrische Energie in Wärme umgewandelt wird, erforderlich sind.

Im folgenden wird die Erfindung anhand der Zeichnungen näher erläutert:

Es zeigen:
Fig. 1 und 2 in schematischer Darstellung zwei Batterien mit Behältern,
Fig. 3a eine Elektrode und
Fiq. 3b einen Separator, jeweils in Draufsicht und
Fig. 4 einen Abriß der Batterie gemäß Fig. 1 entlang der Linie IV.

Das elektrochemische System, u. zw. das für eine Zink-Brom-Batterie mit umlaufenden wässrigen Elektrolyten und einem Komplexbildner für das molekulare Brom, wobei der Komplexbildner als solcher wasserlöslich ist, hingegen der Komplex selbst nur schwer wasserlöslich ist, wird in der EP-B1 0167517 beschrieben, die Bestandteil der vorliegenden Erfindung ist.

Auch die Herstellung von Paketen aus Elektroden, die mit Kohlenstoff gebundenem Polyäthylen aufgebaut sind und einen Rahmen aus elektrochemisch inaktivem Material aufweisen sowie Separatoren aus Polyäthylen, die ebenfalls einen umschweißten Rahmen aufweisen, wobei die Ränder sowohl der Elektroden als auch der Separatoren unmittelbar miteinander verbunden sind, so daß ein Paket aus abwechselnd Elektroden und Separatoren entsteht, die an ihren Rändern miteinander verschweißt sind, wobei die Elektroden als bipolare Elektroden wirken, ist in der EP-B1 0167517 beschrieben, die Bestandteil der vorliegenden Erfindung ist.

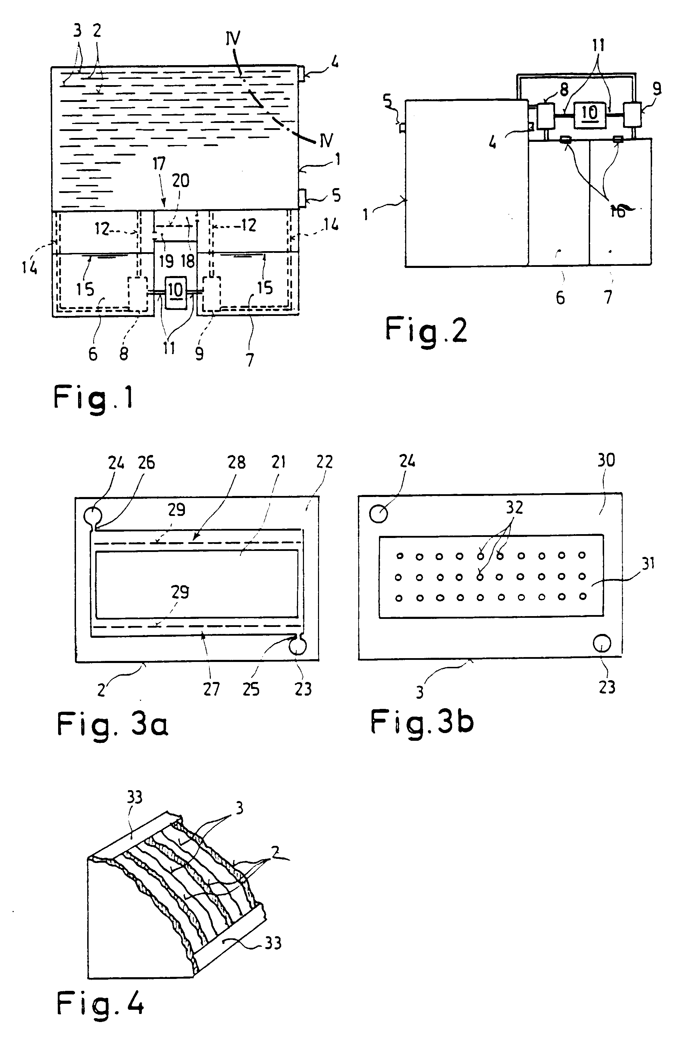

Die in den Fig. 1 und 2 in Ansicht von vorne bzw. von oben dargestellte Zink-Brom-Batterie weist ein Paket 1 aus hintereinander angeordneten Elektroden und Separatoren auf. Sowohl die Elektroden 2 als auch die Separatoren 3 sind bei der Ausführungsform gemäß den Fig. 1 und 2 liegend angeordnet, wie in Fig. 1 strichliert dargestelt. In Fig. 1 ist die Batterie in der Vorderansicht und in Ruhestellung dargestellt. Eine Auflösung der Zinkfilme an den Elektroden kann nicht erfolgen, da kein Elektrolyt in den Elektrodenräumen vorliegt. An den beiden Enden des Zellenpaketes befinden sich Ableitungen 4, 5, die den positiven bzw. negativen Pol der Batterie darstellen. Zwischen dem Endkontakt einer oder beider am Ende angeordneten Elektroden, die in diesem Falle nicht als bipolare Elektroden ausgebildet sind, sondern ein Sammlergitter, beispielsweise aus Silber, aufweisen, kann eine elektrische Sicherung (nicht dargestellt) angeordnet werden, wodurch elektrische Überlastungen und damit thermische Belastungen der Batterie sicher vermieden werden können. Unterhalb des Paketes 1 aus Elektroden und Separatoren sind in Ruhestellung Behälter 6 für den Anolyten und 7 für den Katholyten angeordnet. In Betriebstellung wird die Batterie durch Umdrehen so angeordnet, daß die Behälter oberhalb des Paketes aus Elektroden und Separatoren zu liegen kommen. In den Behältern 6 und 7 sind Pumpräume 8 und 9 angeordnet, wobei die entsprechenden Pumpelemente, u. zw. Turbinenräder, über den gemeinsamen Motor 10 und Achsen 11 angetrieben werden. Die Pumpen saugen über einen in Betriebstellung unten angeordneten Ansaugstutzen 12 die Elektrolytflüssigkeit an und pumpen dieselbe über die Elektrolytzuleitungen 14 in die Anoden- bzw. Kathodenräume. Über nur teilweise dargestellte Elektrolytableitungen gelangt der Elektrolyt zurück in die Behälter. Wie am Flüssigkeitsspiegel 15 ersichtlich, sind die Behälter so ausgebildet, daß das gesamte Elektrolytvolumen in den Behältern aufgenommen werden kann, so daß in längeren Stillstandsperioden die geladene Batterie ohne Elektrolyten in den Anoden- und Kathodenräumen gelagert werden kann. Die Behälter, das Zellenpaket, die Pumpenräume sowie die entsprechenden Zu- und Ableitungen für den Elektrolyten sind untereinander gasdicht und flüssigkeitsdicht verbunden, so daß zwei Raumeinheiten, u. zw. eine für die Katholytflüssigkeit und die andere für die Anolytflüssigkeit, gebildet werden, die lediglich elektrochemisch bedingt über Separatoren miteinander in Verbindung stehen. Eine Abdichtung der Pumpenwellen gegenüber den Pumpenräumen, wie sie insbesondere bei der Ausbildung gemäß Fig. 2 erforderlich ist, da dort die Pumpenräume nicht innerhalb der Elektrolyt behälter angeordnet sind, erfolgt über O-Ring-Dichtungen. Der gas- und flüssigkeitsdichte Verschluß der Behälter kann über drehbare Stopfen 16 erfolgen. Wie in Fig. 1 dargestellt, stehen die Behälter 6 und 7 über einen Druckausgleich 17 in Verbindung. Dieser Druckausgleich weist zwei Kammern 18 bzw. 19 auf, welche durch eine gummielastische Membran 20 voneinander getrennt sind. Kommt es nun zum Druckanstieg im Behälter 6 oder 7, so wird die Membran 20 so lang in den Raum 18 bzw. 19 gedehnt, bis durch den Volumsausgleich ein entsprechender Druckausgleich wieder gewährleistet ist.

Die Zuleitung des Elektrolyten erfolgt nun bei nicht horizontal angeordneten Elektroden derart, daß derselbe im unteren Bereich des Elektrodenraumes eintritt und am oberen Bereich abgezogen wird. Dadurch wird eine sichere Durchströmung des Elektrodenraumes erreicht. Obwohl keine zusätzlichen Maßnahmen gegen Ströme, die zwischen den einzelnen Zellen über die Elektrolytzu- und -ableitungen fließen, in der Regel für bestimmte Einsatzbereiche nicht erforderlich sind, können bekannte Maßnahmen, wie beispielsweise Anlegen von Gegenpotentialen, um die Kriechströme zu kompensieren oder auch Absperrorgane, die bei kurzen oder längeren Stillstandszeiten die Verbindung der einzelnen Elektrodenräumen untereinander über den Elektrolyten verhindern, wie beispielsweise Hähne mit einer Mehrzahl von Öffnungen, so daß mit einer Umdrehung des Hahnes sämtliche Zu- und Ableitungen unterbrochen bzw. geöffnet werden können, vorgesehen werden.

In Fig. 3a ist eine Elektrode 2 dargestellt, wobei ein mittlerer Teil 21, der aus graphitgebundenem Polyäthylen besteht, von einem Rahmen 22 umgeben ist, wobei die Teile 21 und 22 miteinander durch eine Schweißverbindung plan verbunden sind. Der Teil 22 weist untere Durchbrechungen 23 und obere Durchbrechungen 24 auf. Der Rahmen weist eine größere Dicke als der mittlere Teil, also die eigentliche Elektrode, auf, so daß ein Hohlraum durch anliegende Separatoren gebildet werden kann. Von den Durchbrechungen 23 und 24 gehen jeweils Abzweigungen 25 und 26 aus, die in ein Verteilungssystem 27, 28 münden, welche eine gleichmäßige Verteilung des Elektrolyten im Elektrodenraum ermöglichen sollen. Durch die Strömungsschikanen 29 werden bevorzugte Bereiche für die Strömung gebildet, so daß ein gleichmäßiges Durchfließen gewährleistet ist. Die zwei Querschnittsflächen der Durchbrechungen 23 und 24 können entweder einen durchgehend gleichen Querschnitt aufweisen oder sie können derart sein, daß der Zufluß entsprechend der Druckverteilung sich verjüngend oder vergrößernd ausgebildet wird. Auch kann, wie an sich bekannt, in dieser Zuflußleitung durch Anordnung von Elektroden am Ende und am Beginn derselben ein Kompensationsstrom aufgebracht werden.

In Fig. 3b ist ein Separator 3 dargestellt, welcher einen Rahmen 30 aufweist, der im wesentlichen elektrochemisch inaktiv ist und in welchem der innere Teil 31 der eigentliche Separator eingeschweißt ist. Dieser kann, wie hier dargestellt, zylinderförmige Vorsprünge 32 aufweisen, die einerseits zur Stabilisierung des Elektrodenraumes beitragen und anderseits turbulente Strömungen im Elektrodenraum ermöglichen, so daß an den Elektroden und Separatoren anhaftende Grenzschichten der Flüssigkeit abgelöst werden. Die Separatoren weisen ebenfalls Durchbrechungen 23 und 24 auf, die mit den entsprechenden der Elektroden kooperieren und durchgehende Zuleitungen und Ableitungen bilden.

Wie aus Fig. 4 ersichtlich, sind die Elektroden 2 und Separatoren 3 jeweils in ihrem Randbereich 33 miteinander verschweißt, so daß Anoden- bzw. Kathodenräume entstehen, die jeweils durch die eine Fläche der bipolaren Elektrode und den Separator begrenzt sind.

Eine derartige Batterie kann beispielsweise je nach Erfordernis einen Griff aufweisen oder auch zwei Griffleisten besitzen, so daß die Handhabung der Batterie einfacher ist.

Eine derartige Batterie kann weiters anstelle der beiden Ableitungen 4, 5 auch eine Steckverbindung aufweisen, wie sie bei anderen leicht portablen Stromspeichern bekannt ist. So kann ein derartiger portabler Stromspeicher, beispielsweise an Bohrmaschinen, Heckenscheren, Kettensägen, aber auch anderen portablen Elektrowerkzeugen, angesteckt werden. Sind die Stromspeicher entweder durch Gebrauch oder auch Lagerung entladen, so kann eine Ladung desselben über ein Ladegerät und dem normalen elektrischen Netz erfolgen. Hiebei ist von besonderer Bedeutung, daß die Ladezeiten für Zink-Brom-Batterien im Vergleich zu anderen elektrochemischen Speichern besonders gering gehalten werden können, da hohe Stromdichten, insbesondere auf Grund des umlaufenden Elektrolyten, möglich sind.

Eine derartige in sich geschlossene Batterie ist auch besonders für Rasenmäher geeignet. Hiebei kann beispielsweise entweder die Walze oder das Messer, mit welcher(m) das Gras geschnitten wird, von einem Elektromotor, welcher mit einem elektrischen Schalter angestellt wird, angetrieben sein. Der elektrische Antrieb für die Pumpen, u. zw der Motor, liegt immer an Spannung der Batterie an. Damit wird sichergestellt, daß beispielsweise am Ende eines Mähvorganges die Pumpen bis zur vollständigen elektrischen Entladung der Batterie tätig sind. Gegebenenfalls kann im Schaltkreis Batterie und Motor für die Pumpen ein Schaltglied vorgesehen sein, das es ermöglicht, die Pumpen zeitweilig außer Betrieb zu setzen. Dies kann dann von Interesse sein, wenn der Mähvorgang unterbrochen wird, so daß kein Stromverbrauch durch das Umwälzen der Elektrolyten bedingt werden soll. Ein derartiger Schalter kann ein Zeitverzögerungsglied aufweisen, das beispielsweise nach fünf oder zehn Minuten die Pumpen wieder zwangsweise in Betrieb setzt, wobei es weiters erforderlich ist, daß mit Einschalten des Elektromotors für den Rasenmäher ebenfalls der elektrische Schaltkreis für den Pumpenmotor wieder geschlossen wird. Jedenfalls ist damit sichergestellt, daß die Batterie bei der Lagerung derselben in den ungeladenen Zustand übergeführt wird, und thermische Belastungen über den Umlauf des Elektrolyten vermieden sind. Zum Inbetriebsetzen der Batterie ist es allerdings erforderlich, daß diese sodann geladen wird. Da Zink-Brom-Batterien relativ hohe Strombelastungen ausgesetzt werden können, ist eine Batterie mit einer Kapazität von 600 W/h mit einer Spannung von 48 Volt innerhalb von längstens 1 1/2 Stunden voll aufladbar. Soll mit einem derartigen Rasenmäher jedoch nur eine Fläche von beispielsweise 100 m2 gepflegt werden, so genügt bereits eine Ladezeit von ca. 10 Minuten.

Ein Rasenmäher, betrieben mit einer Zink-Brom-Batterie, hat neben dem an sich bekannten Vorteil eines elektrischen Antriebes, daß keine zusätzlichen Emissionen stattfinden, auch noch den besonderen Vorteil, daß die Zink-Brom-Batterie als solche, da sie den Motor abdecken kann und aus schlecht schalleitenden Materialien aufgebaut ist, eine zusätzliche Schalldämmung erreicht. So kann ein derartiger Rasenmäher, betrieben mit Gleichstrom, in ca. 1 m Entfernung lediglich einen Schallpegel von 51 dB aufweisen.

Für Spitzenbelastungen während des Ladens oder auch des Betriebes kann es erwünscht sein, in jedem Elektrolytkreislauf einen eigenen Wärmetauscher zur Wärmeabgabe vorzusehen.

## Patentansprüche

1. Zink-Brom-Batterie mit umlaufenden Elektrolyten, motorgetriebenen Pumpen mit Pumpenräumen (8, 9), Behältern, (7, 6) mit einem Druckausgleich für die Elektrolyten, bipolaren Elektroden (2) und zwischen diesen angeordneten Separatoren (3), die mit Kunststoff aufgebaut sind, wobei die Rahmen (33) der Separatoren (3) und die eine größere Dicke als der mittlere Teil der Elektroden (2) aufweisenden Rahmen (22) der Elektroden (2) miteinander verschweißt sind und den damit gebildeten Elektrodenräumen zugeordnete Elektrolytzu- und -ableitungen (12, 14) und gegebenenfalls Wärmetauscher für die Elektrolyten, dadurch gekennzeichnet, daß durch jeweils zumindest einen Behälter (6), Katholytzu- und ableitungen (12, 14), Pumpraum (8) und Kathodenräume eine gas- und flüssigkeitsdichte Einheit gebildet ist, welche mit einer weiteren derartigen Einheit, gebildet mit einem weiteren Behälter (7), Anolytzu- und -ableitungen (12, 14) weiteren Pumpraum (9) und Anodenräumen, ausschließlich über Separatoren (3) verbunden sind, und daß zwischen beiden Elektrolytbehältern (6, 7) für den Druckausgleich zwei Kammern (18, 19) vorgesehen sind, die durch eine gummielastische Membran (20) voneinander getrennt sind.

2. Zink-Brom-Batterie nach Anspruch 1, dadurch gekennzeichnet, daß beide Pumpen von einem gemeinsamen Motor (10) antreibbar sind.

3. Zink-Brom-Batterie nach Anspruch 1 oder 2 , dadurch gekennzeichnet, daß das Flüssigkeitsaufnahmevermögen der Behälter (6, 7) jeweils zumindest dem jeweiligen Anolyt- bzw. Katholytvolumen entspricht.

4. Zink-Brom-Batterie nach einem der Ansprüche 1 bis 3, dadurch gekennzeichnet, daß die Behälter (6, 7) nebeneinander, bezogen auf die Elektroden und Separatoren, angeordnet sind.

5. Zink-Brom-Batterie nach einem der Ansprüche 1 bis 4, dadurch gekennzeichnet, daß in Betriebstellung der Batterie die Behälter (6, 7) über den Elektroden und Separatoren angeordnet sind.

6. Zink-Brom-Batterie nach einem der Ansprüche 1 bis 5, dadurch gekennzeichnet, daß jeder Behälter (6, 7) eine verschließbare Öffnung zur Entnahme und Wiederfüllung für die Elektrolytflüssigkeit aufweist.

7. Zink-Brom-Batterie nach einem der Ansprüche 1 bis 6, dadurch gekennzeichnet, daß die Separatoren (3) und/oder die Elektroden (2) an ihren Rändern z. B. umschweißten Rahmen (22, 30), miteinander deckende durchgehende Durchbrechungen (23, 24) aufweisen, durch welche durchgehende Kanäle als Elektrolytzu- bzw. -ableitung gebildet sind, welche jeweils in die Elektrolyträume Abzweigungen (25, 26) aufweisen.

8. Zink-Brom-Batterie nach einem der Ansprüche 1 bis 7, dadurch gekennzeichnet, daß zwischen dem Endkontakt (4, 5) einer Elektrode und der Ableitung zum Verbraucher eine elektrische Sicherung angeordnet ist.

9. Zink-Brom-Batterie nach einem der Ansprüche 1 bis 8, dadurch gekennzeichnet, daß die Batterie zumindest einen Griff, insbesondere zwei einander gegenüberliegende Griffleisten, aufweist.

10. Verfahren zum Lagern einer Zink-Brom-Batterie nach den Ansprüchen 1 - 9, dadurch gekennzeichnet, daß eine gezielte Entladung der Batterie mit umlaufenden Elektrolyten durchgeführt und sodann die Batterie im ungeladenen Zustand gelagert wird.

11. Verfahren zum Lagern einer Zink-Brom-Batterie nach Anspruch 10, dadurch gekennzeichnet, daß vorzugsweise als alleiniger, Verbraucher der gezielten Entladung der elektrische Antrieb für die Pumpen des/der Elektrolyten verwendet wird.

## Claims

1. Zinc-bromine battery including circulating electrolytes, motor-driven pumps and comprising pump chambers (8, 9), electrolyte pressure-compensating tanks (7, 6) , bipolar electrodes (2) and separators arranged therebetween and made from plastic material, with frames (33) of said separators and frames (22) of said electrodes (2) which show a bigger thickness than the central portion of said electrodes (2) being soldered together, such an assembly further including electrolyte feeding and draining ducts (12, 14) which are associated with the so-formed electrode chambers, and, if necessary, heat exchangers for said electrolytes, characterized in that at least a tank (6), catholyte feeding and draining ducts (12, 14), a pump chamber (8) and cathode chambers form a gaz and liquid tight unit, which is connected, exclusively through separators (3), to another unit of this type, including a further thank (7), anolyte feeding and draining ducts (12, 14), a further pump chamber (9) and anode chambers, and in that, between both electrolyte tanks (6, 7), for pressure compensating purposes, two chambers (18, 19) are provided which are spaced apart by a rubber-type resilient diaphragm (20).

2. The zinc-bromine battery of claim 1, characterized in that both pumps can be driven by a common motor (10).

3. The zinc-bromine battery of claim 1 or 2, characterized in that the liquid capacity of said tanks (6, 7) respectively corresponds to at least the anolyte and catholyte volume.

4. The zinc-bromine battery of any claim 1 to 3, characterized in that both tanks (6, 7) are side by side arranged, in relation to said electrodes and separators.

5. The zinc-bromine battery of any claim 1 to 4, characterized in that, with the battery being in working order, both tanks (6, 7) are arranged above said electrodes and separators.

6. The zinc-bromine battery of any claim 1 to 5, characterized in that each tank (6, 7) includes a closable opening with a view to drawing and re-filling said electrolyte liquid.

7. The zinc-bromine battery of any claim 1-6, characterized in that said separators (3) and/or said electrodes (2) show on the frames (22, 23) thereof, continuous coinciding passages (23, 24), e.g. which are soldered around the edges thereof, through which continuous ducts are formed as an electrolyte feeding duct and an electrolyte draining duct, each having by-passes (25, 26) towards said electrolyte chambers.

8. The zinc-bromine battery of one of claims 1 to 7, characterized in that an electrical fuse is arranged between the terminal contact (4, 5) of an electrode and the conductor directed towards the heat sink element.

9. The zinc-bromine battery of one of claims 1 to 8, characterized in that said battery includes at least a handle, especially two opposite handle bars.

10. A process for storing a zinc-bromine battery of claims 1 to 9, characterized by the steps of carrying out a definite discharge of said circulating electrolyte battery, and then of storing said battery in a discharged condition.

11. The process of storing a zinc-bromine battery of claim 10, characterized in that an electric drive for electrolyte(s) pumps is preferably used for said definite discharge as a heat sinking element.

## Revendications

1. Batterie zinc-brome comprenant des électrolytes en circulation, des pompes entraînées par moteur et comportant des chambres de pompe (8, 9), des réservoirs (7, 6) à compensation de pression pour les électrolytes, des électrodes bipolaires (2) et des séparateurs (3) agencés entre-celles-ci et réalisés en matière plastique, les cadres (33) des séparateurs (3) et les cadres (22) des électrodes (2) qui présentent une épaisseur plus importante que la partie centrale des électrodes (2), étant soudés les uns aux autres, l'ensemble comprenant également les conduites d'alimentation et d'évacuation d'électrolyte (12, 14) associées aux chambres d'électrodes ainsi formées, et, le cas échéant, des échangeurs de chaleur pour les électrolytes, caractérisée en ce qu'au moins un réservoir (6), des conduites d'alimentation et d'évacuation de catholyte (12, 14), une chambre de pompe (8) et des chambres de cathode forment une unité étanche aux gaz et aux liquides, qui est reliée, exclusivement par l'intermédiaire de séparateurs (3), à une autre unité de ce type, formée d'un autre réservoir (7), des conduites d'alimentation et d'évacuation d'anolyte (12, 14), une autre chambre de pompe (9) et des chambres d'anode, et en ce qu'entre les deux réservoirs d'électrolyte (6, 7) sont prévues, pour la compensation de pression, deux chambres (18, 19), qui sont séparées l'une de l'autre par une membrane (20) élastique du type en caoutchouc.

2. Batterie zinc-brome selon la revendication 1, caractérisée, en ce que les deux pompes peuvent être entraînées par un moteur (10) commun.

3. Batterie zinc-brome selon la revendication 1 ou 2, caractérisée en ce que la capacité en liquide des réservoirs (6, 7) correspond respectivement au moins au volume d'anolyte et de catholyte.

4. Batterie zinc-brome selon l'une des revendications 1 à 3, caractérisée en ce que les réservoirs (6, 7) sont disposés côte à côte, relativement aux électrodes et aux séparateurs.

5. Batterie zinc-brome selon l'une des revendications 1 à 4, caractérisée en ce qu'en position de fonctionnement de la batterie, les réservoirs (6, 7) sont agencés au-dessus des électrodes et des séparateurs.

6. Batterie zinc-brome selon l'une des revendications 1 à 5, caractérisée en ce que chaque réservoir (6, 7) présente une ouverture pouvant être fermée, pour retirer et remplir à nouveau le liquide d'électrolyte.

7. Batterie zinc-brome selon l'une des revendications 1 à 6, caractérisée en ce que les séparateurs (3) et/ou les électrodes (2) présentent sur les cadres (22, 33) par exemple soudés autour de leurs bords, des passages (23, 24) continus qui coïncident, au travers desquels sont formés des canaux continus en tant que conduite d'alimentation et conduite d'évacuation d'électrolyte, qui présentent chacune des dérivations (25, 26) vers les chambres d'électrolyte.

8. Batterie zinc-brome selon l'une des revendications 1 à 7, caractérisée en ce qu'entre le contact terminal (4, 5) d'une électrode et le conducteur de départ vers l'élément dissipateur, est disposé un fusible électrique.

9. Batterie zinc-brome selon l'une des revendications 1 à 8, caractérisée en ce que la batterie comporte au moins une poignée, notamment deux barres de poignée opposées l'une à l'autre.

10. Procédé de stockage d'une batterie zinc-brome selon les revendications 1 à 9, caractérisé en ce que l'on réalise une décharge définie de la batterie à électrolytes en circulation, et l'on stocke ensuite la batterie dans l'état déchargé.

11. Procédé de stockage d'une batterie zinc-brome selon la revendication 10, caractérisé en ce que l'on utilise de préférence pour la décharge définie, en tant qu'élément dissipateur, l'entraînement électrique pour les pompes de l'électrolyte/des électrolytes.
